# EUROPEAN PATENT SPECIFICATION

(11) **EP 3 319 459 B1**
(45) Date of publication and mention of the grant of the patent: **03.03.2021**
(21) Application number: 16734662.6
(22) Date of filing: 05.07.2016
(51) Int. Cl.: A23L 27/40, A23L 27/00, A23P 10/28, A23P 10/25, A23L 29/294, A23L 27/10, A23P 10/20

(54) **PROCESS TO PREPARE SODIUM AND/OR POTASSIUM SALT PRODUCTS, SALT PRODUCT OBTAINABLE THEREBY AND THE USE THEREOF**
VERFAHREN ZUR HERSTELLUNG VON NATRIUM- UND/ODER KALIUMSALZPRODUKTEN, DAMIT HERGESTELLTES SALZPRODUKT UND VERWENDUNG DAVON
PROCÉDÉ DE PRÉPARATION DE PRODUITS À BASE DE SEL DE POTASSIUM ET/OU DE SODIUM, PRODUIT SALIN POUVANT AINSI ÊTRE OBTENU ET SON UTILISATION

(30) Priority: 08.07.2015 EP 15175943
(43) Date of publication of application: 16.05.2018
(73) Proprietor: Nouryon Chemicals International B.V., 6824BM Arnhem (NL)
(72) Inventor: ALTENA, Evert, 7425 RD Deventer (NL); BRAND, Johannes, 7333 CS Apeldoorn (NL)
(74) Representative: LKGlobal UK Ltd.
(86) International application number: PCT/EP2016/065762
(87) International publication number: WO 2017/005714

(56) References cited:
- WO-A1-03/068006
- WO-A1-2010/124905
- FR-A1- 2 468 313
- US-A- 2 046 862

## Description

The present invention relates to the use of specific salt comprising sodium chloride and/or potassium chloride particles to prepare a free-flowing salt product in which one or more agents are absorbed, and to the process to prepare a free-flowing salt product comprising sodium chloride (NaCI) and/or potassium chloride (KCI) in which one or more agents are absorbed.

Among other reasons, sodium and/or potassium salt, meaning sodium chloride, potassium chloride and combinations of sodium chloride and potassium chloride (hereinafter salt) is used in foods for its particular taste and its taste-enhancing properties. For that reason it is often combined with flavoring agents. The use of potassium chloride (KCI) is often desired when salt is used in a low sodium diet. Therefore salt comprising KCI and not sodium chloride (NaCI) can be preferred. For other uses, where the specific taste of KCI, that is typically considered to be unpleasant, is undesired, the salt preferably does not comprise KCI. In practice a combination of KCI and NaCl is often desirable in order to optimize the taste and consistency of a salt-containing product.

Very often the salt is used in compositions which also contain one or more flavoring agents. This is, for instance, the case in various seasonings, salted snacks, soups, sauces, bouillon cubes, etc. The flavoring agents, typically oils and fats, are incompatible with the salt. Conventionally the flavoring agents have just adhered to the surface of the salt crystal or the outside of grains of salt crystals. Due to the fact that the agent was just on the outside of the crystals and grains, the amount of agent which can be used in the composition is limited. At the desired level of agent a conventional salt will show lumping, reduced flowability of the salt product, and even smearing of the grains, resulting in a slush-like product. Also at lower concentrations like 0.1-0.5% by weight of agent on the salt a "gluing" of the salt crystals by agent is often observed during storage. Further, with conventional salt, a salted product with a small amount of an agent like oil and/or fat that is adhered to it, can lead to a product that looks oily, which is typically found to be less appealing to the consumer. Therefore a salt is typically not combined with one or more agents. It is noted that the agent is typically used for organoleptic properties, particularly taste, color, odor, and mouth feel. A liberal use of the agent in combination with salt is often desired. The combined use of agent and salt is furthermore desired as this would have advantages like improved dosage control, less handling (only one product needs to be stored) and augmentation of the organoleptic properties (which allows a reduction of the amount of sodium in the salt).

Although the above adverse effect of using a high load of agent can be wholly or partially compensated by adding additives to the salt compositions comprising said agent, for instance in the form of silica and/or silicates, the use of such additives is not desired, since such products are foreign materials, increase cost, and may lead to the mandatory listing of the compound as an E-number, which is undesired, for instance, from a marketing perspective. Preferably the salt, when combined with one or more oils and/or fats, would also result in an esthetic product that does not look oily.

It is noted that in WO 2010/124905, a salt product containing additives, which term includes flavoring agents such as oils, extracts, etc., is obtained by milling the ingredients and subsequent compacting them, after which the compacted intermediate is broken to result in a salt composition with a desired particle size. A disadvantage of using agents like oils and fats in the process is that often problems are observed in the compaction step, as the oils tend to ooze out when used in higher quantities, with the associated disadvantages of reduced economics and spills. Further, such a process leads to products have a fixed amount of a specific additive contained in it, which restricts their use to those applications where particularly these flavoring agents are needed in the specific ratio to salt as produced. The disadvantages mentioned may be accepted for compositions as in WO 2010/124905 wherein a homogeneous distribution of the ingredients over the grains of the salt composition is essential. However, a more flexible process is desired, which allows the producer of food product to combine the salt, oils and/or fats, and other ingredients in the amount desired.

Surprisingly it was found that parts of the technology of WO 2010/124905 for making special homogeneous grades of low-sodium salt, can be used in a process in which one can produce a salt intermediate product into which surprisingly high amounts of one or more agents can be absorbed, in an amount much higher than in conventional salt products, while remaining free-flowing and without the disadvantages observed when a conventional salt is used. More particularly, it was found that specific steps of the process as presented in WO 2010/124905 can be combined with a step to absorb one or more agents into the salt composition, particularly inside the salt particles (sometimes denoted as salt grains), resulting in the desired process and desired products, which can be used in food products, for instance, in food seasoning, salted snacks, soups, sauces, and bouillon cubes.

FR 79 27761 relates to a flavoured table salt which is attained by spreading table salt as a thin layer and subsequently spraying on that layer an aromatic or aromatic extract. The flavoured table salt can also be attained by heating the table salt to a temperature of between 40 and 60°C to lower its level of humidity and subsequently impregnating it with an aromatic or an aromatic extract. FR 79 27761 furthermore discloses a process to prepare flavoured table salt comprising the steps of humidifying table salt, introducing a substance for fixing the aromatic and sprinkling a micronized aromatic on the humidified salt. The salt used in the process according to FR 79 27761 is sea salt or rock salt with the following composition:

| | |
|---|---|
| - Humidity | 2 to 4 % |
| - Sodium salt | 88 to 92 % |
| - Magnesium salt | 1.3 to 3 % |
| - Calcium salt | 0.3 to 1 % |
| - Various insoluble materials | 0 to 0.5 % |

The granulometry is mentioned to be that of salt used in the culinary arts under the name "coarse salt" and also "fine salt". The salt is not a porous salt. The aromatic is not absorbed into the salt particles but is present merely on the outside of the salt particles. Not only does this have the disadvantage that the distribution of the flavouring agent in the salt is far from uniform, this also means that only low amounts of a flavouring agent can be added in order to keep the salt free-flowing.

### SUMMARY OF THE INVENTION

In the process of the invention pure NaCl, KCI, or salts comprising NaCl, KCI, or both, is first provided, in the form of particles with d50 of less than 100 micrometer (µm). If need be, the salt is first processed, typically by milling, to form such particles. Preferably the provided salt composition contains particles with a d50 particle size of less than 75 µm. Even more preferably, the provided salt composition contains particles with a d50 of between 40 and 60 µm. However, for economic reasons the larger average particle size may be preferred.

The provided salt is subsequently compacted at elevated pressure, more specifically at a pressure of at least 40 MPa, preferably of at least 75 MPa, more preferably of at least 100 MPa, to form an intermediate compressed salt product. Preferably, the provided salt is compacted at a pressure of at most 400 MPa, more preferably at a pressure of at most 200 MPa, and most preferably at a pressure of at most 125 MPa.

In an optional next step the compressed salt is comminuted again to form a final intermediate salt product with a d50 of greater than 50 µm, preferably greater than 100 µm, more preferably greater than 250 µm, but preferably no greater than 1000 µm and most preferably no greater than 750 µm. Such comminuted material was found to more quickly absorb the agent according to the present invention than a product which was not comminuted.

The intermediate salt product is optionally classified using conventional ways, typically by sieving, and fines may be discarded or recycled to the compaction step. The too large particles may be discarded or recycled or treated in a comminution step. For economic reasons this is preferably not the first processing step but a comminution step after the compaction step, most preferably, if present, it is the optional comminution step after the compaction step.

The so-obtainable salt intermediate was found to be able to absorb surprisingly high quantities of various agents while still having an acceptable flowability.

The invention includes the above process comprising an additional subsequent step wherein one or more agents are absorbed into the particles (also sometimes denoted as grains) of the intermediate salt product.

Furthermore, the invention relates to the use of salt particles having a particle size of from 50 µm to 1000 µm to absorb between 1 to 8% by weight, based on the total amount of salt particles, of one or more agents into said salt particles, in order to produce a free-flowing salt product comprising said agent(s), whereby the salt particles into which the one or more agents are absorbed have been obtained by processing a source of pure NaCl, pure KCI, or a mixture of salts comprising NaCl and/or KCI, to form particles with an average size of less than 100 micrometer, followed by compacting said particles using a pressure of from 40 to 400 MPa, and optionally, subjecting the thus obtained particles to a communition step.

### DETAILS OF THE INVENTION

The current invention relates to a process to prepare a free-flowing salt product comprising sodium chloride (NaCI) and/or potassium chloride (KCI), wherein the salt product has a particle size of from 50 µm to 1000 µm, which process comprises the steps of:
a. processing a source of pure NaCl, pure KCI, or a mixture of salts, to form particles with an average size of less than 100 micrometer;
b. subsequently, compacting the particles from step a) using a pressure of from 40 to 400 MPa; and optionally, crushing the thus obtained particles; and
c. subsequently, absorbing one or more agents into the salt particles, characterized in that no agent is added in or during steps a) and b) or between steps a) and b).

In step (a) of the process of the invention pure NaCl, KCI, or combinations of salts comprising NaCl and/or KCI, is first provided in the form of particles with a d50 of less than 100 micrometer (µm), and preferably larger than 10 µm, most preferably larger than 20 µm. If need be, the salt is first processed, typically by milling, to form such particles. Preferably the provided salt composition contains particles with a d50 particle size of less than 75 µm, even more preferably less than 60 µm. Most preferably, the provided salt composition contains particles with a d50 particle size of between 40 and 60 µm. However, for economic reasons the larger average particle size may be preferred.

It should be understood that materials specified to have a specific particle size are seldom composed of only particles having the same particle size. In this respect where a (salt) product or any other material in this specification is specified to have a certain particle size, it is generally accepted by the persons skilled in the art that for particle size should be read the "average particle size" or "d₅₀" of a product. D50 of a product is defined as that particle size in a particle size distribution of a product for which particles having a particle size less than d50 comprise 50 percent by weight (%w/w) of the product. The particle size distribution was determined by laser light diffraction, according to NEN-ISO 13320-1 using the Sympatec HELOS and Sympatec RODOS as dry dispersion system. (Sympatec GmbH Clausthal-Zellerfeld, Germany)

In an embodiment of the invention the salt is pure NaCl or pure KCI meaning NaCl or KCI, respectively, which is technically pure and having a NaCl or KCI content, respectively, of at least 98%w/w, more preferably of at least 99%w/w. The salt to be used in this invention can be of one or more different origins, like sea salt, rock salt, purified (vacuum) salt, or a synthetic salt origin.
In an embodiment of the invention, a salt composition is used which is a mixture of salts, said mixture of salts comprises NaCl and/or KCI. Preferably it is a mixture of salts which comprises at least 10 percent by weight (%w/w), preferably at least 30 %w/w, and more preferably at least 50%w/w of NaCl, based on the total weight of said mixture of salts. Said mixture of salts may further comprise at least 3 percent by weight (%w/w), preferably at least 7 %w/w, and more preferably at least 10%w/w of KCI, based on the total weight of said mixture of salts.

In an embodiment of the invention, at least KCI is used in combination with the NaCl. In a more preferred embodiment, potassium chloride is used in an amount such that the weight ratio of Na : K is from 80:20 to 20:80, most preferably from 75:25 to 30:70. In case other salts, like KCI, are combined with NaCl, the salt products of the invention may be labeled as a low-sodium salt product.

In an embodiment of the invention, the salt composition comprises from 1 to 50% of one or more salts other than NaCl and KCI. Other salts which may be combined with sodium chloride and/or potassium chloride are preferably selected from the group consisting of sodium lactate, trisodium citrate, sodium gluconate, monosodium phosphate, disodium phosphate, trisodium phosphate, tetrasodium acid pyrophosphate, sodium acid sulfate, sodium carbonate, sodium bicarbonate, potassium citrate, potassium gluconate, monopotassium phosphate, dipotassium phosphate, tripotassium phosphate, tetrapotassium pyrophosphate, potassium sulfate, potassium acetate, potassium bicarbonate, potassium bromide, potassium lactate, calcium chloride, calcium acetate, calcium chloride, calcium citrate, calcium-D- gluconate, calcium lactate, calcium levulinate, dibasic calcium phosphate, magnesium oxide, magnesium chloride, magnesium carbonate and magnesium sulphate, ammonium chloride, and combinations thereof. Most preferably these salts are selected from the group of magnesium chloride, calcium chloride, choline chloride, ammonium chloride, and magnesium sulphate.

In one embodiment, other salts that can be comprised in the salt composition are the salts that can be found in bittern, the solution that remains after evaporation and crystallization of sodium chloride from brines, preferably from seawater. These bittern salts are typically calcium and magnesium chlorides and sulfates, as well as bromides, iodides, and other salts originally present in the seawater. In a preferred embodiment, the salt composition also comprises magnesium chloride and magnesium sulphate.

In any of the previous embodiments, less than 5 %w/w, preferably less than 3 %w/w, more preferably less than 1 %w/w of a non-salt is present with the salt, such as organic compounds present in bittern.

As described above, the provided salt is processed into an intermediate compressed salt product (i.e. the intermediate salt product obtained in step (b) of the process according to the present invention). The compaction is at elevated pressure, more specifically at a pressure of at least 40 MPa, preferably of at least 75 MPa, more preferably of at least 100 MPa, to form an intermediate compressed salt product. Preferably, the provided salt is compacted at a pressure of at most 400 MPa, more preferably at a pressure of at most 200 MPa, and most preferably at a pressure of at most 125 MPa. The resulting salt product is optionally subjected to a communition step in order to obtain salt particles with an average particle size of from 50 µm to 1000 µm.

It was surprisingly found that the intermediate compressed salt product according to the present invention (i.e. the salt particles which are obtained in step (b) of the process described above) can absorb high amounts of the agents according to the present invention, while remaining free-flowing.

In an embodiment of the invention, 1, 2, 4, up to 8%w/w of one or more agents is absorbed and adhered to the intermediate compressed salt product (i.e. the salt particles which are obtained in step (b) of the process as described above), based on the weight of resulting salt product. At least 1 %w/w (based on the total weight of the resulting salt product) of one or more agents according to the present invention is absorbed into the intermediate compressed salt product. More preferably up to 1.5, even more preferably up to 2, more preferably still up to 4, even more preferably up to 6, and most preferably up to 8 %w/w of one or more agents is absorbed into the intermediate compressed salt product (based on the total amount of the resulting salt product).

The ability of a salt composition to flow freely is determined using the Degussa test as described in US 4274286. In this test, a salt sample is transferred into various cups with different outlet sizes, starting with the widest one. After deblocking the outlet, the sample should pour out spontaneously. If this is the case, the next smaller outlet is tried, until the sample does not flow out of the cup spontaneously. The number of the latest cup with spontaneous flow is recorded. The flowability is classified according the following table.

| Flow from cup no. | Outlet diameter [mm] | Classification |
|---|---|---|
| 1 | 2.5 | Very good |
| 2 | 5 | Good |
| 3 | 8 | Satisfactory |
| 4 | 12 | Just sufficient |
| 5 | 18 | Insufficient |
| no flow | | Bad |

According to the present invention, the salt composition is referred to as being free-flowing if the score in the Degussa test as just described is at least "satisfactory".

As described above, the intermediate salt product is subjected to a further step in which one or more agents according to the present invention are absorbed into the salt particles. In this step (i.e. step (c) of the process according to the present invention), one or more agents are contacted with the intermediate salt product and at least partially absorbed into the particles of the intermediate salt product. The word "particles" is used here to describe the intermediate compressed product as obtained after the compaction step and the optional comminution and/or classification step. According to the non-proven theory, absorption into the grains means that the material absorbed, migrated into the voids between the fragments, which is not possible in the conventional crystals, separate fragments, or conglomerates thereof. The average particle size of the grains of the intermediate and the free-flowing salt product according to the present invention typically is in the range from 50 µm to 1 mm.

For the sake of clarity it is noted that the one or more agents are added to salt particles which have been obtained by (a) processing a source of pure NaCl, pure KCI, or a mixture of salts comprising NaCl and/or KCI, to form salt particles with an average particle size of less than 100 micrometer, followed by (b) compacting said particles using a pressure of from 40 to 400 MPa, and optionally followed by a communition step if needed to obtain salt particles with an average particle size of from 50 µm to 1000 µm, are not used or added in either step (a) or step (b) of the process, nor between step (a) or (b). The one or more agents are added to the salt product obtained in step (b) in a subsequent step (c).

The term "agent" as used herein refers to materials which can be added to the salt in the liquid form, whereby the agent is not water or any other liquid in which the salt dissolves for more than 5% by weight at 20°C at 1 atm (1,013 bar), more preferably 1% by weight at 20°C at 1 atm. Preferably the solubility of salt in the agent is less than 0.95%w/w, more preferably less than 0.9%w/w at 20°C at 1 atm. In an embodiment the agent comprises one or more solvents. In an embodiment according to the invention, the agent comprises a solvent which is miscible with an oil. If a solvent is used, it is preferably a solvent that is food and/or feed approved. Examples of suitable solvents are triacetin, MCT (Medium Chain Triglyceride) oils such as palm kernel oil and coconut oil, poly ethylene glycols (PEG) of various molecular weights, and ethanol. The agent can comprise a solvent to speed up the absorption process, i.e. to reduce the viscosity of other components comprised in the agent. If so desired, and if a solvent is used that can be evaporated from the salt, the solvent is suitably evaporated to leave remaining components of the agent absorbed in the salt product.

In an embodiment the agent comprises one or more molten materials, such as molten fat.

In an embodiment the agent comprises a lipid or oleo-resin.

In an embodiment the agent comprises one or more oils and/or fats, a term used herein to denote pure or mixtures of oils and fats. Preferably the one or more oils and/or fats are food-grade oils and/or food-grade fats.

For a fat to be absorbable by the salt, it either has to be heated so it becomes oil, or it has to be dissolved. As mentioned above, a solution in a solvent that does not dissolve the salt can be used. Preferably the solvent is an organic solvent. In an embodiment the solvent is an oil. The oil and/or fat can be any triglyceride, both from animal or vegetable origin, partially or fully hydrogenated derivatives thereof, and or one or more of the fatty acids and/or alcohols derived therefrom. If the oil and/or fat is extracted from a source using a solvent, then it may be preferred to use the same oil-solvent mixture for absorbing in the intermediate product in accordance with the invention.

Suitable oils and fats are derived from animal oils, including fish oils, such as butterfat, depot fat, lard, lard oil, neat's-foot oil, tallow, cod-liver oil, herring oil, menhaden oil, sardine oil, sperm oil, whale oil, and vegetable oils, preferably those derived from allspice, almond, aloe-vera, angelica, aniseed, apricot kernel, arnica, avocado, baobab, basil, bay, benzoin, bergamot, birch, bitter almond, pepper, bell pepper, blackberry, blueberry, boldo, buchu, cajuput, calamus, capsicum, cardamom, chamomile, chicory root, calendula, camphor, caraway, carrot seed, cassia, cedar wood, chive, cineole, cinnamon, citronella, citrus (including orange oil, lemon oil, bitter orange oil and tangerine oil), clary sage, clove, cocoa butter, coconut, coffee, coriander, corn, cotton seed, cumin, cypress, dill, elemi, eucalyptus, evening primrose, fennel, frankincense, garlic, geranium, ginger, grape seed, grapefruit, hazelnut, helichrysum, hop, hyssop, jasmine, jojoba, juniper, kola, lavandin, lavender, leek, lemon, lemongrass, lemon verbena, licorice root, lime, linseed, macadamia, mandarin, marigold, marjoram, marula, melissa, mugwort (thujone), mustard, myrrh, neem, neroli, niaouli (gomenol), niger seed, nutmeg, oiticica, olive, onion, orange, oregano, palm, palm kernel, palma rosa, paprika, patchouli, peanut, pennyroyal, peppermint, perilla, petitgrain, pimento, pine, poppy seed, pumpkin seed, rapeseed, rice bran, rose, rose geranium, rose otto, rosehip, rosemary, rosewood, rue, safflower, sage, sandalwood, sarsaparilla root, sassafras bark, savin, sesame, soybean, spearmint, spikenard, sunflower, high oleic sunflower, tagetes, tamarind, tangerine, tansy, tarragon, thuja, thyme, tea tree, tuberose, tung, turmeric, vanilla, vernonia, vetiver, walnut, wheat germ, wintergreen, wormseed, wormwood, yarrow, and ylang-ylang, as well as babassu oil, and castor oil. Preferably the oils are selected from basil, lavender, celery, garlic, onion, pepper, ginger, and citrus oils.

In an embodiment the agent comprises a flavoring agent, such as yeast extracts, celery extracts, or mushroom extracts. If such products are solid then the agent also comprises a solvent for these products, whereby the solvent in the agent satisfies the definition as given above. Preferred flavoring agents include benzaldehyde, diacetyl(2,2-butanedione), vanillin, ethyl vanillin, and citral (3,7-dimethyl-2,6-octadienal).

The amount of agent to be absorbed into the salt grains is from 1 to 8% by weight (%w/w, all based on the total weight of the resulting salt product). Depending on the type of oil and/or fat, i.e. its viscosity, and depending on the use of carriers or solvents, as well as depending on the processing time that is acceptable, i.e. the time to allow the salt intermediate to absorb the one or more oils and/or fats, it may be advantageous to limit the amount of oil and/or fat to be absorbed to an amount of at most 5% w/w of the total weight of the salt product. If very small amounts of oil are to be absorbed, i.e. for an essential oil, the process can be facilitated by incorporating the essential oil in a carrier. Said carrier is suitably another oil or a solvent of the invention.

It was surprisingly found that a salt in which the agent is absorbed in the grain, has organoleptic properties that are similar to or more pronounced than of conventional products in which the salt and oil are separately present. This is particularly relevant for products in which the salt is applied topically and in such applications the oil and/or fat can be absorbed after application of the intermediate salt product. Hence in another embodiment the intermediate salt, or salt composition, is used for topical distribution over a food product, whereby the oil and/or fat absorption step takes place after the salting of the food product. The oil and/or fat that is absorbed is an oil and/or fat which is, or over time becomes, available on the surface of the food products, or is added together with or after the salting of the food product.

In another embodiment a concentrated flavoring product is prepared, preferably a bouillon cube, by combining salt, one or more agents, preferably comprising one or more oils and/or fats, optional flavoring compounds, such as herbs, and further optional compounds, such as fillers. The use of the salt or salt composition of the invention resulted in a bouillon cube which had better physical stability when compared to the same cubes made with conventional salt. When an oil or fat is used, the product also is more appealing since it looks less oily/fat.

In yet another embodiment the salt product of the invention comprises an agent which is an essential oil, also known as volatile oil, ethereal oil, and aethrolea, and is used as a bath salt for instance as a fragrant, or for skin treatment. The salt may optionally also contain glycerin as the agent which can serve as a solvent, emollient, humectant or lubricant depending on its use. The salts products of the invention optionally comprise hygroscopic salts, such as CaCl₂ to control the release rate of the agent.

For free flowing salt products of any embodiment of the invention with an absorbed amount of agent of less than 5 %w/w, preferably less than 3%w/w, of the total weight of the salt product, the storage or shelf life of the agent was found to have increased. More specifically, the absorbed agent is less prone to air oxidation or interaction with other chemicals.

If so desired, the salt products of any embodiment of the invention may contain one or more absorbed coloring agents. Preferably such a colorant is comprised in the agent. More preferably the colorant is absorbed together with an oil and/or fat. Suitably the oil is the solvent for small amounts of colorant to be absorbed. When a colorant is comprised in the absorbed agent, the even distribution of the agent over the salt product is easily seen using an optical microscope.

If so desired, the salt products of any embodiment of the invention may contain one or more masking and taste-improving substances which can be selected from the group of acids, such as succinic acid, citric acid, phosphoric acid, sodium hydrogen sulphate; amino acids and derivates thereof, like glutamates; yeast; yeast extracts; hydrolyzed proteins from sources like yeast extracts; peptides; hydrolyzed vegetable protein; ribonucleotides; flavonoids; amides of amino acids with dicarboxylic acids; trehalose; gluconates and other flavouring and flavour-modulating substances, or combinations thereof. Other examples include organic acids like tartaric acid, ascorbic acid, formic acid, fumaric acid, gluconic acid, maleic acid, adipic acid, lactic acid, malic acid; salts of organic acids; the salts of ribonucleotides; products from the Maillard reaction and fermented foods, like soy sauce, fish sauce, anchovies, and cheese. If these substances can be comprised in the agent and be absorbed in the intermediate salt, then it is preferred to do so for reason of economics, since less process steps are needed, and accuracy of dosing of these substances.
Protein hydrolysates include hydrolyzed vegetable protein (HVPs), meat protein hydrolysates, milk protein hydrolysates; compounded flavours both natural and artificial; and processed (reaction) flavours prepared through a Maillard-type reaction between reducing sugars and protein-derived components including amino acids.

The salt product in which one or more oils and/or fats are absorbed according to the invention consists of free-flowing particles. These particles may be incorporated into food and/or feed products, such as soups (wet or dry form), sauces, pre-cooked meals, etc. In another embodiment the salt product of the invention consists of particles adsorbed to a food product, preferably it is part of a salted snack. In another embodiment, the salt product of the process of the invention consists of a fused composition comprising the salt product and further materials needed for such a fused product, such as bouillon cubes.

In an embodiment that can be combined with any of the other embodiments, the salt products of the invention optionally contain one or more further additives. These further additives can be any material suitable for human or animal consumption or food- or feed-grade additive that on addition to the salt product using the process of the invention will not cause problems in the process of the invention, the salt product, and the intermediates present. Typically, any further additive can be used as long as salt is not dissolved by it. Preferably, the further additives are substantially dry form. The additive is not sodium chloride and also not the agent (e.g. the oil and/or fat) as used in the process. Materials that are suitable for human or animal consumption are, in an embodiment, materials that are allowed by the relevant authorities to be added to human food and animal feed products. Preferably, the additive is an organic additive. Substantially dry in this application means having a free water content of below 3 %w/w, preferably of below 1 %w/w, on the basis of (total) solids. Free water means any water that can be evaporated in 8 hours at 100°C.
The (organic) further additive in one embodiment is selected from the group of materials that suppress, enhance, influence or change the taste and/or flavour, or materials that influence the caking properties, free flowability, colour, texture, microbial stability, odour or nutritional value of the salt product or the food product in which the salt product of the present invention may be used. Organic means that the additive is a hydrocarbon based material or derivative thereof. Suitably, one or more additional additives are selected from the group of vitamins, acids, yeasts, amino acids, functional additives or nutrients, like fluorides, iodides, iodates, minerals, nitrites, nitrates, flavouring agents, fragrances, saccharides, (natural) flavours, spices, or herbs. Preferably the further additive is derived from a natural source.

### COMMUNITION

To form particles of the required size (in step (a) and (b) of the process according to the present invention), any method of size reduction of particles as known in the art can be used. Examples of suitable methods include milling, breaking and crushing. It should be noted that the components can be crushed with two or more of them in one combined step or by separate crushing steps. If a sodium chloride-replacing material is used in the process, it can be crushed together with the sodium chloride or separately.

### COMPACTION

The pressure used for compacting the processed salt is the pressure applied at uniaxial compaction of a tablet (leading to a certain density of the compacted particle mixture). However, compacting may suitably be done by other compactors, like a roll compactor. In such cases, the pressure to be used is one that will result in the same density of the compact as in uniaxial compaction. The step of compacting is meant to include any method where the particles are agglomerated by applying an external force, for instance by tabletting or agglomerating them under a pressure of from 40 to 400, preferably of from 50 to 200 MPa, more preferably a pressure of from 60 to 150 MPa, most preferably of from 75 to 125 MPa.

### ABSORPTION

It is preferred that the agent according to the invention is distributed as evenly as possible over the grains. For small amounts (< 1 kg), manual kneading in a plastic bag is a preferred method, but when larger quantities are applied, mechanical mixing is required. It should be noted that low shear mixers are a prerequisite as otherwise attrition of the grains, leading to dustiness, could be a problem. Examples of such mixers are vertical screw mixers.
When an agent is a low viscous liquid, it can be added as such to the grains. However, high viscous liquids might distribute poorly over the particles and result in an uneven loading of the grains. Then heating to a moderate temperature (max 80°C) is an option. Dissolving, melting or mixing with a low viscous solute are other ways of preparing the agent for proper addition.

It was found that the one or more agents according to the invention are located within the salt composition particle. More particularly, the salt composition particle has pores which absorb the agents according to the present invention.

The process of the invention in one embodiment can contain a subsequent step in which the material is sieved to isolate particles of the desired composition or to separate the particles of the desired particle size range(s) from too fine and too coarse particles. In such an embodiment, typically after the comminution step, the material is sieved to remove too fine and/or too coarse particles from the salt product(s) and optionally these too fine and/or too coarse particles are recycled to earlier steps in the process.

In an embodiment of the invention in the process of the invention an additional additive is sprayed onto the salt product. If the process comprises a classification step for the salt then preferably before, during or after the classification step. This embodiment is particularly useful when there is a desire to add further additives to the salt product that are hard or impossible to isolate in a substantially dry form or much more easily processed or distributed in a liquid (or dissolved) form. This additional step of adding further additives may be followed by a drying step if needed.

The invention is now further explained based on the non-limiting examples provided below.

### Example 1

Another way to describe the flowability of a particulate solid than the Degussa test as mentioned above is via the Dynamic Angle of Repose. In this test a fixed amount of the particulate solid is charged into a flat disc (diameter 25.9 cm, width 3.5 cm) which is connected to a drive with variable speed. The inner circumferential wall of the disc is provided with P60 sand paper. When the disc is filled with the test sample, the drive is switched on and the disc starts rotating at the lowest speed. Subsequently, the speed is gradually increased, until the backsliding sample forms a smooth surface. The angle this smooth surface makes to the horizontal is called the dynamic angle of repose.
Commercially available NaCl (Suprasel Extra Fine, ex Akzo Nobel) and Suprasel OneGrain A30 Extra Fine, ex Akzo Nobel, were split into comparable portions of approx. 142 ml each. This is the required amount to perform the test.

The first test was done with blank Suprasel Extra Fine, no liquid was added. The rotation speed of the disc was 7 rpm. When the angle was determined, the sample was taken out of the disc into a plastic bag and 0.1 wt% Hozol (High Oleic Sunflower Oil, ex Contined) was added. The sample was manually homogenized for 2 minutes and then left for 15 minutes after which it was homogenized once more for 1 minute. Subsequently, the sample was put in the disc again and the test was repeated. It was repeated once more with the addition of 1 wt% Hozol. The results are shown in the table below.

**Table 1: Suprasel Extra Fine**

| Test no. | Amount of Hozol added | Dynamic angle of repose |
|---|---|---|
| | [wt%] | [°] |
| 1 | 0.0 | 34.5 |
| 2 | 0.1 | 48.5 |
| 3 | 1.0 | -- |

These results show that after the addition of only 0.1 wt% Hozol to the Suprasel Extra Fine the dynamic angle of repose increases significantly, which indicates a worsening of the flowability. The addition of 1 wt% Hozol to the salt makes it even stick to the wall of the disc and the dynamic angle of repose cannot be determined anymore.
Then the same test was performed with a salt composition according to the present invention. This composition was prepared as follows: A mix of 69% NaCl (Suprasel Fine ex Akzo Nobel), 26% KCI ex K + S Kali GmbH and 5% yeast extract ex DSM Food Specialties b.v. were fed to an air classifying mill and milled until the particle size met the requirement of max. 5% retention on a 212 µm screen, 0-10% retention on a 150 µm screen and 45-60% retention on a 45 µm screen.
On a roll compactor the mix was compacted to cigar-like compacts and subsequently milled on a Fitzmill DKSO12 hammer mill. The resulting product was sieved on a gyratory screen supplied with a 140 µm and a 250 µm screen, whereby the fines and coarse are sieved off, providing a product which is denoted as Salt Extra Fine. Certain amounts of Hozol were added.

The results are shown in the following table. From these results, it is clear that significantly more Hozol could be added before the dynamic angle of repose was significantly impacted. When 2.0 wt% Hozol was added, a slight increase of the angle was noticed.

**Table 2: Salt Extra Fine with different amounts of Hozol**

| Test no. | Amount of Hozol added | Dynamic angle of repose |
|---|---|---|
| | [wt%] | [°] |
| 1 | 0.0 | 38 |
| 2 | 0.1 | 36.5 |
| 3 | 1.0 | 38 |
| 4 | 2.0 | 41.5 |

This test shows that the addition of only 0.1 wt% of Hozol to regular extra fine NaCl is enough to impact the flowability of Suprasel Extra Fine, expressed as the dynamic angle of repose, significantly. However, the addition of 2.0 wt% of Hozol to Salt Extra Fine only results in a small increase of the dynamic angle of repose.

### Example 2

A good way to describe the flowability of a particulate solid is via the Degussa test, *vide supra.* In this test, a sample is transferred into various cups with different outlet sizes, starting with the widest one. In this example, glass funnels were used of 41.6 mm diameter and with a 90 mm height. As explained above, after deblocking the outlet, the sample should pour out spontaneously. If this is the case, the next smaller outlet is tried, until the sample does not flow out of the cup spontaneously. The number of the latest cup with spontaneous flow is recorded. The flowability is classified according the following table.

**Table 3: Flowability qualification**

| Flow from cup no. | Outlet diameter [mm] | Classification |
|---|---|---|
| 1 | 2.5 | Very good |
| 2 | 5 | Good |
| 3 | 8 | Satisfactory |
| 4 | 12 | just sufficient |
| 5 | 18 | Insufficient |
| no flow | | Bad |

Four different salt compositions were tested:
(a) a salt composition which was prepared according to the present invention, denoted as A30 Fine (A30F),
(b) another salt composition which was prepared according to the present invention denoted as TS-M100 Fine,
(c) a salt composition which is not according to the present invention, viz. Morton Star Flake Dendritic Salt ex Morton Salt Inc, and
(d) another salt composition which is not according to the present invention, viz. Suprasel Microzo ex AkzoNobel.

For the preparation of A30 Fine, a mix of 69% NaCl (Suprasel Fine ex Akzo Nobel), 26% KCI ex K + S Kali GmbH and 5% yeast extract ex DSM Food Specialties b.v. were fed to an air classifying mill and milled until the particle size met the requirement of max. 5% retention on a 212 µm screen, 0-10% retention on a 150 µm screen and 45-60% retention on a 45 µm screen.
On a roll compactor the mix was compacted to cigar-like compacts and subsequently milled on a Fitzmill DKSO12 hammer mill. The resulting product was sieved on a gyratory screen supplied with a 250 µm and a 710 µm screen, whereby the fines and coarse are sieved off.
For the preparation of TS-M100 Fine, the same process was followed, but the mix consisted of 56.9% NaCl (Suprasel Fine ex Akzo Nobel), 37.6% KCI ex K + S Kali GmbH and 5.5% flavor ex Givaudan.

From each test 100 g was charged into a small plastic bag. The test was started with the blank salts, no Hozol was added, and the cup no. was recorded. Then a small amount (approx. 0.5 wt%) Hozol was added to the samples, after which they were thoroughly mixed by hand for 2 min and left for 30 min. The test was repeated and another small amount of Hozol was added. This procedure was continued until no flow was possible anymore from the cups. The amount of Hozol that was added to the sample at the occasions the flowability qualification changed is recorded in the following table.

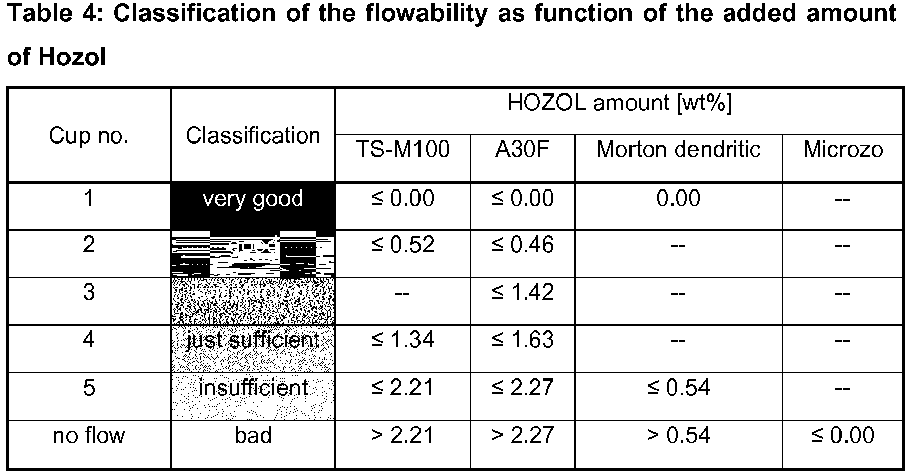

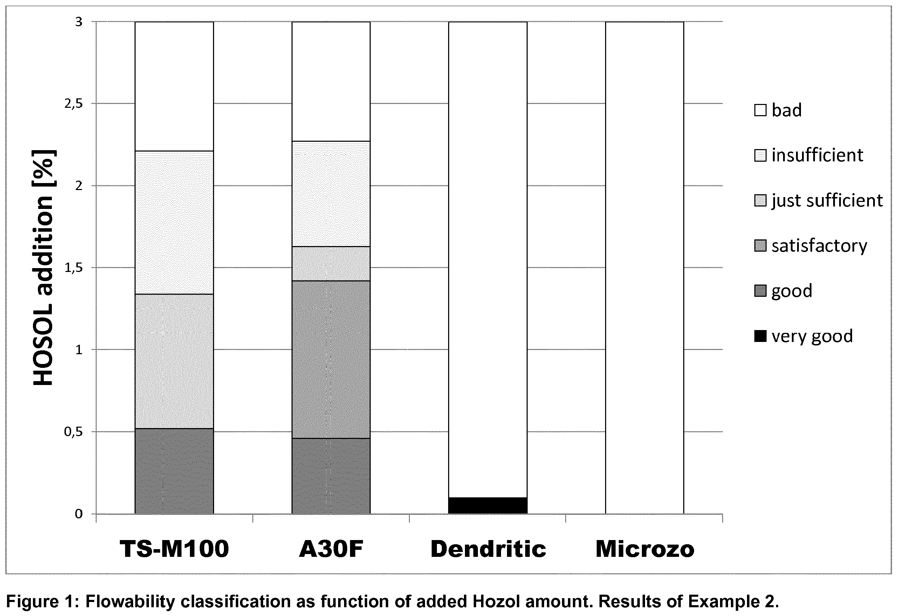

The Morton Dendritic salt showed a very good flowability as long as no Hozol was added. After the first addition of Hozol (0.54 wt%), flow from the widest cup was not possible anymore. The flowability of Microzo salt was already bad when no Hozol was added. On the other hand, the salt compositions mentioned under (a) and (b) above were able to absorb a certain amount of Hozol before the flowability gradually decreased. At approx. 1.5 wt% the flowability turned to insufficient. See also Fig. 1.

### Example 3

The preparation of the salt compositions according to the present invention which were used in this example was done in 5 consecutive steps. In the first step the raw materials NaCl (Suprasel Fine ex Akzo Nobel) and KCI (ex K + S Kali GmbH) were milled on an Alpine 160 UPZ pin mill operated at 7125 rpm to a d50, NaCl = 42.3 µm and d50, KCI = 52.6 µm. From these milled raw materials, four product mixes of each 2000 g were prepared in the second step. These mixtures consisted of:
(a) 100% NaCl
(b) 80% NaCl / 20% KCl
(c) 20% NaCl / 80% KCl
(d) 100% KCl

From these mixtures tablets of each 50 g were prepared on a Herzog HTP-40 tablet press using a 1.0 t/cm2 compaction pressure. In the fourth step these tablets were first broken diametrically and then further crushed on a Frewitt GLA-ORV rubbing sieve using a 6 mm, 3.15 mm and finally a 1 mm screen. The resulting product was sieved on a 90 µm, 280 µm and a 710 µm screen.

Based on the tablet dimensions and the true density of the raw materials, the porosity of the tablets could be calculated.

Besides above mentioned samples also regular Suprasel Fine ex Akzo Nobel and regular KCl ex K + S Kali GmbH were included in the tests.

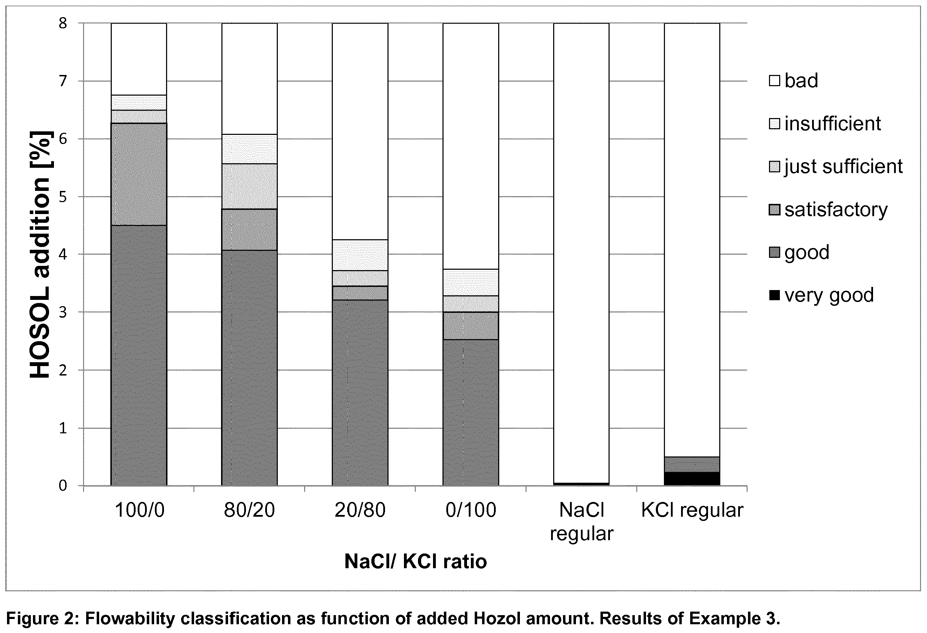

The flowability of the salts was determined using the Degussa test. For a description of this test, see Example 2. First the blank salts were subjected to the test. Subsequently approx. 0.5 wt% Hozol was added and thoroughly mixed in by hand. A period of 30 min was used to ensure proper distribution of the Hozol. Then the test was repeated. Subsequently the amount of Hozol was increased in steps of approx. 0.25 wt% until the sample did not pour out of the widest cup anymore. The results are given in table 5 and Figure 2.

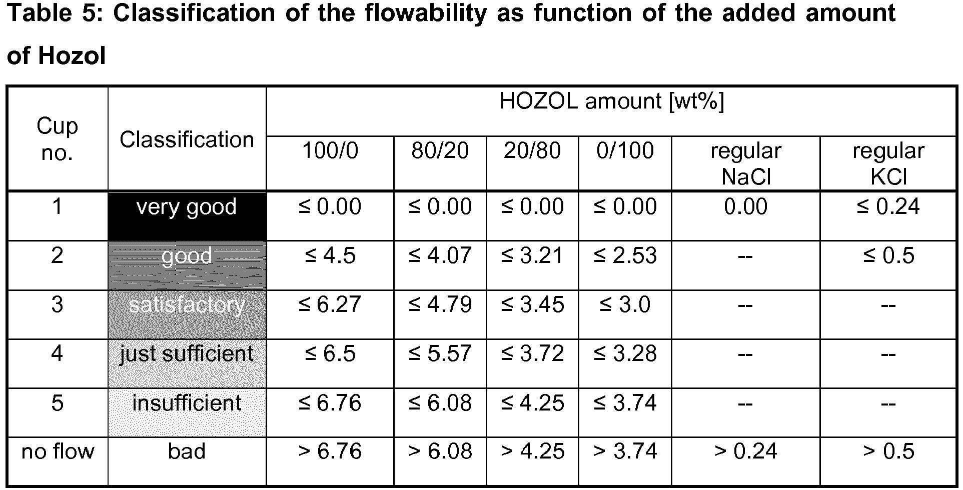

The addition of Hozol to regular Suprasel Fine had a huge impact on the flowability. Where the blank salt flowed very well, the addition of only 0.24 wt% Hozol hindered the spontaneous flow from even the widest cup. Regular KCI could handle 0.5 wt% before spontaneous flow was hindered.

The formulations prepared according to the present invention clearly could handle a much larger amount of Hozol. The product prepared according to the present invention based on 100% KCI kept at least a "just sufficient" classification when 3.3 wt% Hozol was added. The 100% NaCl product prepared according to the present invention could cope with 6.5 wt% before it lost its "just sufficient" classification.

### Example 4

Another way to evaluate the flow behavior of a particulate solid is by running a flow function test on a ring shear tester. This test is a simulation of particulate solids flowing from a vessel through an orifice. The test was executed with a Brookfield Powder Flow Tester, model PFT manufactured by Brookfield Engineering Laboratories, Middleboro, Massachusetts, USA. The Powder Flow Tester was equipped with a standard ring shaped trough with an outer diameter of 156.5 mm and in inner diameter of 97 mm. After filling the trough, the test is started. At 5 different consolidation stresses, which represent a fill level of a vessel, the unconfined failure strengths were measured. This is the stress at which the particulate solid yields and flows. The values of each measuring point are plotted in a curve as unconfined failure strength (σC) versus major principal consolidation stress (σ1).

In this plot, 5 regions can be identified with the following classification:

| | |
|---|---|
| 0 ≤ σC/σ1 < 0.1 | : Free flowing |
| 0.1 ≤ σC/σ1 < 0.25 | : Easy flowing |
| 0.25 ≤ σC/σ1 < 0.5 | : Cohesive |
| 0.5 ≤ σC/σ1 < 1.0 | : Very cohesive |
| σC/σ1 > 1.0 | : Non flowing |

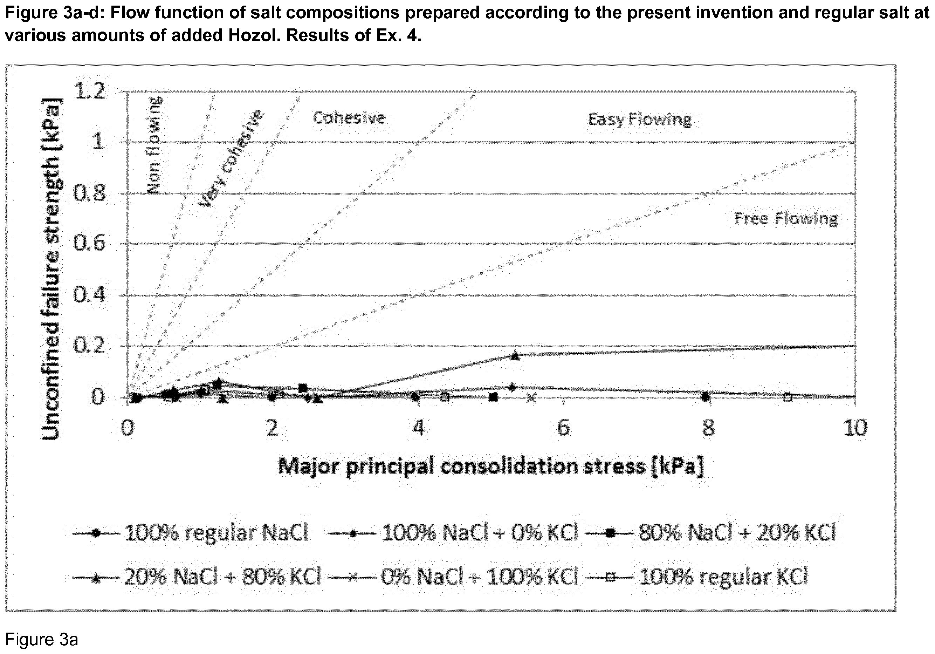

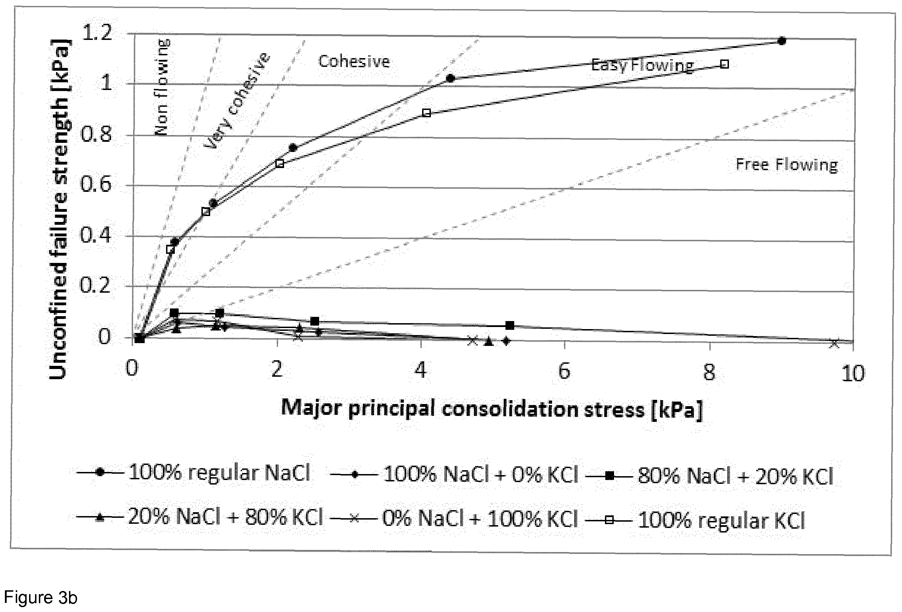

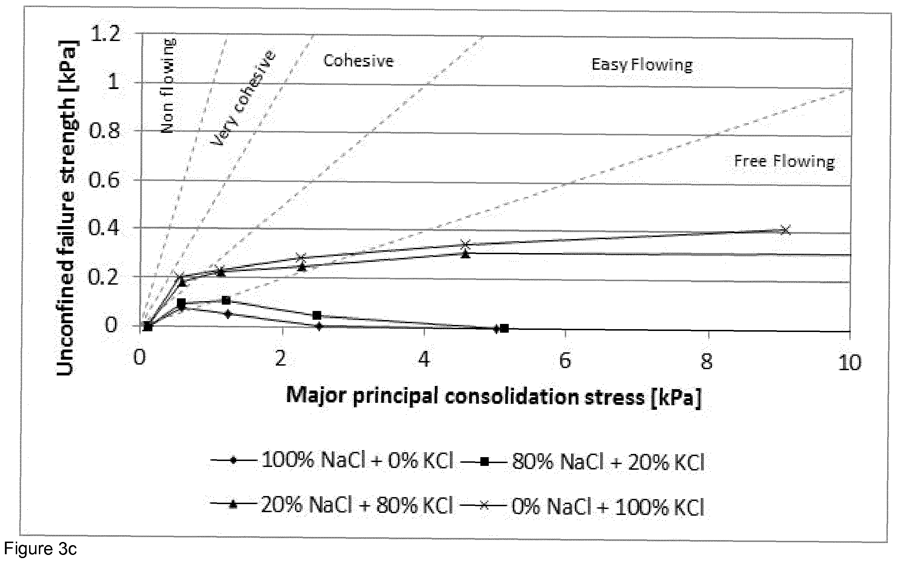

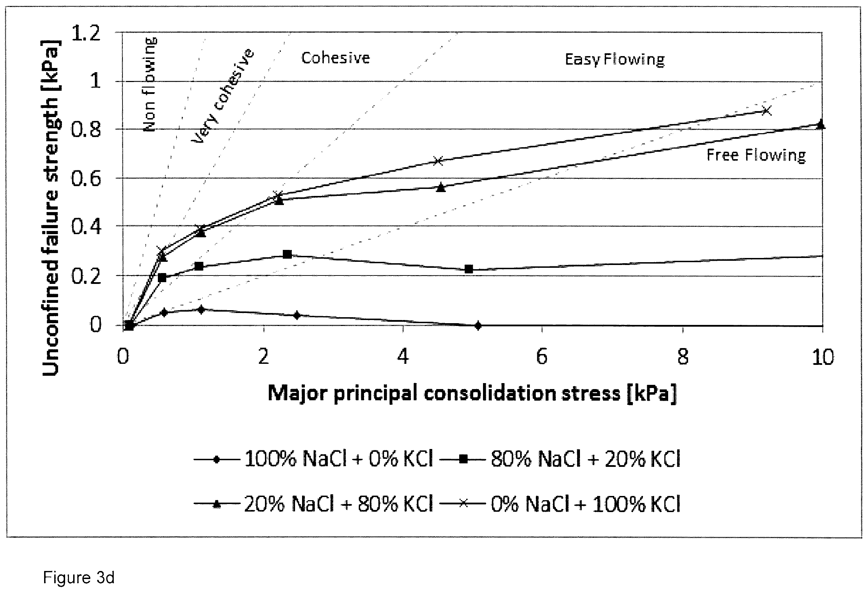

The same salt products as described in Example 3 were subjected to this test. Starting from the blank salts, also mixtures with 2%, 4% and 6% Hozol were tested. Additionally also regular NaCl (Suprasel Fine ex AkzoNobel) and KCI (ex K + S Kali GmbH were tested. The results are plotted in the figures 3a, b, c, d, respectively.

Figure 3a shows the flow functions when no Hozol was added. All salts behaved as free flowing solids. Then 2% Hozol is added and mixed in thoroughly. Figure 3b plot shows the flow behavior of these samples.
It is clear that both regular salts, NaCl and KCI, had a worse performance and could be classified as "very cohesive" at low consolidation stresses. At higher stresses this behavior improved somewhat.
The behavior of the salts prepared according to the present invention upon the addition of Hozol was much better. Even at low stresses the solids behaved as "easy flowing" at 2% Hozol addition. At 4% addition the salts prepared according to the present invention containing 100% or 80% NaCl behaved "cohesive at low stresses, but turned into "easy flowing" already at 1 kPa consolidation stress. At 6% Hozol addition, the flow behavior further worsened, but even then the 100% NaCl prepared according to the present invention still exhibited "free flowing" behavior over the whole tested range of consolidation stresses.

### Example 5

NaCl (Suprasel Fine ex Akzo Nobel) and KCI (ex K + S Kali GmbH) were milled on an Alpine 160 UPZ pin mill (d50, NaCl = 42.3 µm, d50, KCI = 52.6 µm) and thoroughly mixed in a 50/50wt% ratio. From this mixture tablets of each 50 g were prepared on a Herzog HTP-40 tablet press using various compaction pressures:
(a) 0.75 t/cm2
(b) 0.88 t/cm2
(c) 1.0 t/cm2
(d) 1.25 t/cm2

Based on the tablet dimensions and the true density of the raw materials, the porosity of the tablets could be calculated. These tablets were first broken diametrically and then further crushed on a Frewitt GLA-ORV rubbing sieving using a 6 mm, 3.15 mm and finally a 1 mm screen. The resulting product was sieved on a 90 µm, 280 µm and a 710 µm screen.

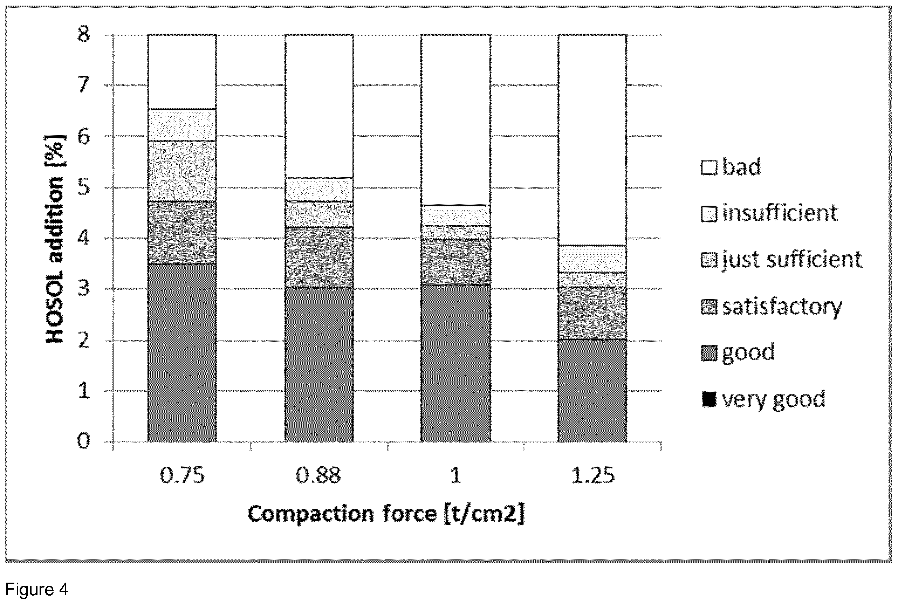

From the grains in the fraction 250 - 710 µm the flowability was measured as a function of the amount of added Hozol ex Contined. The Degussa test is used for this. First the blank salts were subjected to the test. Then approx. 2.0 wt% Hozol was added and thoroughly mixed in by hand. A period of 30 min was used to ensure proper distribution of the Hozol. Then the test was repeated. Next, the amount of Hozol was increased in steps of approx. 0.25 - 0.5 wt% until the sample did not pour out of the widest cup anymore. The results are given in table 6 and Figure 4.

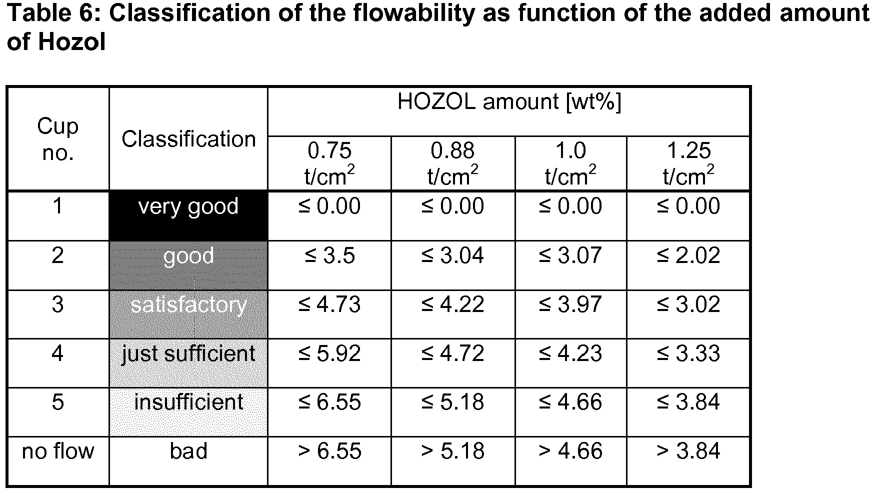

It is shown that the amount of Hozol that can be absorbed depends on the compaction force that was applied. But even at 1.25 t/cm², the highest force, more than 3% Hozol could be added to the salt composition before the flowability became insufficient.

### Example 6

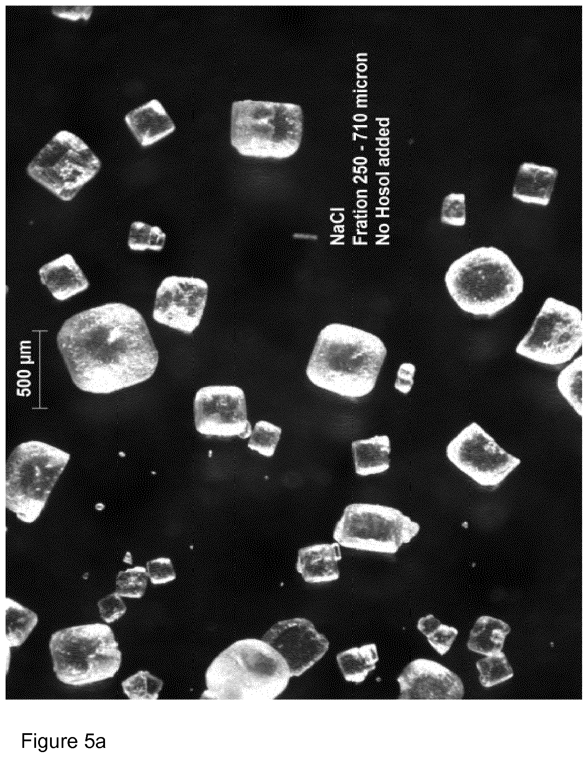

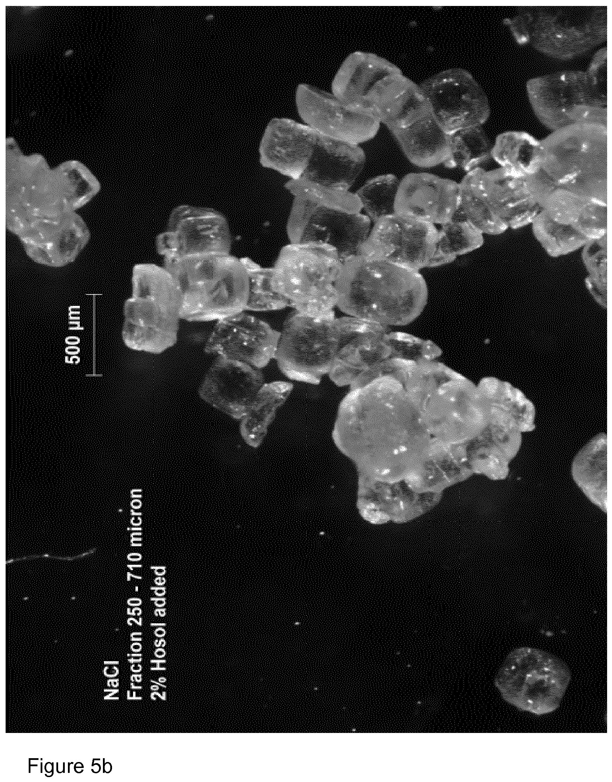

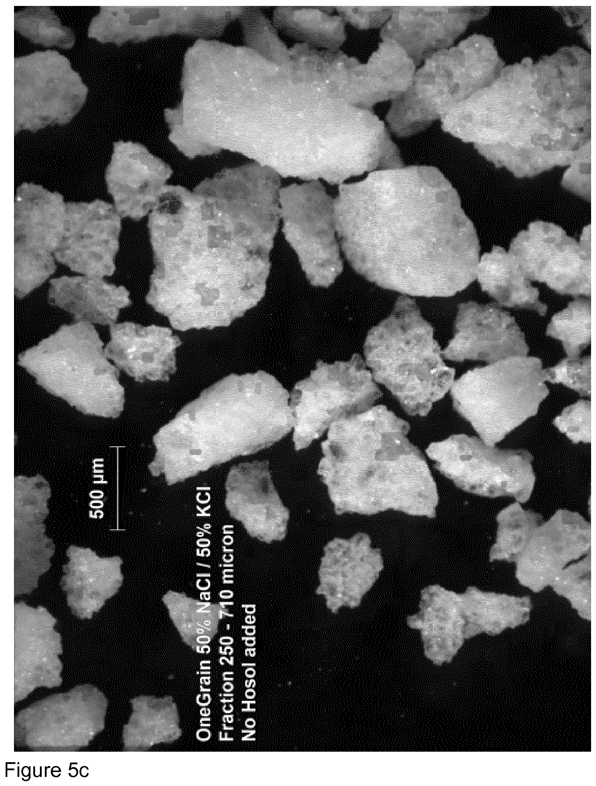

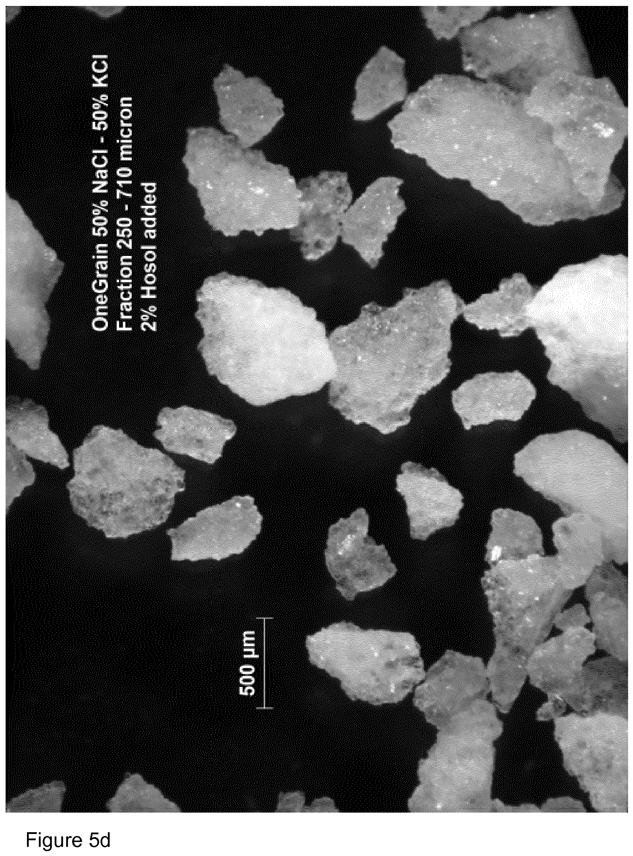

A comparison has been made between sodium chloride crystals with and without Hozol as the agent and a product according to the present invention, with and without Hozol. The results are depicted in Figures 5a-d.

Picture 5a and 5b show NaCl (Suprasel Fine ex AkzoNobel) before and after the addition of 2 wt% Hozol. Where the blank NaCl sample consists of loose, single crystals, it is a lumpy mass after the addition of Hozol, wherein the crystals tick together.

Picture 5c and 5d show that before and after the addition of Hozol to NaCl prepared according to the method as described in Example 3, the grains do not stick to each other. The oil is well absorbed leaving the grains as single particles.

## Claims

1. Use of salt particles having a particle size of from 50 µm to 1000 µm to absorb between 1 to 8% by weight, based on the total amount of salt particles, of one or more agents into said salt particles, in order to produce a free-flowing salt product comprising said agent(s), whereby the salt particles into which the one or more agents are absorbed have been obtained by
(a) processing a source of pure NaCl, pure KCI, or a mixture of salts comprising NaCl and/or KCI, to form particles with an average size of less than 100 micrometer, followed by
(b) compacting said particles using a pressure of from 40 to 400 MPa, and
optionally, subjecting the thus obtained particles to a communition step,
whereby no agent is added in or during steps (a) and (b) and no agent is added between steps (a) and (b), and wherein the agent is in liquid form, not being water or any other liquid in which the salt dissolves for more than 5% by weight at 20°C at 1 atm (1,013 bar).

2. Use of salt particles according to claim 1 to absorb one or more agents selected from the group consisting of a flavouring agent, a colouring agent, and a fragrance.

3. Use of salt particles according to claim 1 or 2 wherein the agent is selected from the group consisting of butterfat, depot fat, lard, lard oil, neat's-foot oil, tallow, cod-liver oil, herring oil, menhaden oil, sardine oil, sperm oil, whale oil, vegetable oils derived from allspice, almond, aloe-vera, angelica, aniseed, apricot kernel, arnica, avocado, baobab, basil, bay, benzoin, bergamot, birch, bitter almond, pepper, bell pepper, blackberry, blueberry, boldo, buchu, cajuput, calamus, capsicum, cardamom, chamomile, chicory root, calendula, camphor, caraway, carrot seed, cassia, cedar wood, chive, cineole, cinnamon, citronella, citrus, clary sage, clove, cocoa butter, coconut, coffee, coriander, corn, cotton seed, cumin, cypress, dill, elemi, eucalyptus, evening primrose, fennel, frankincense, garlic, geranium, ginger, grape seed, grapefruit, hazelnut, helichrysum, hop, hyssop, jasmine, jojoba, juniper, kola, lavandin, lavender, leek, lemon, lemongrass, lemon verbena, licorice root, lime, linseed, macadamia, mandarin, marigold, marjoram, marula, melissa, mugwort, mustard, myrrh, neem, neroli, niaouli, niger seed, nutmeg, oiticica, olive, onion, orange, oregano, palm, palm kernel, palma rosa, paprika, patchouli, peanut, pennyroyal, peppermint, perilla, petitgrain, pimento, pine, poppy seed, pumpkin seed, rapeseed, rice bran, rose, rose geranium, rose otto, rosehip, rosemary, rosewood, rue, safflower, sage, sandalwood, sarsaparilla root, sassafras bark, savin, sesame, soybean, spearmint, spikenard, sunflower, high oleic sunflower, tagetes, tamarind, tangerine, tansy, tarragon, thuja, thyme, tea tree, tuberose, tung, turmeric, vanilla, vernonia, vetiver, walnut, wheat germ, wintergreen, wormseed, wormwood, yarrow, ylang-ylang, babassu oil, castor oil, yeast extracts, celery extracts, mushroom extracts, benzaldehyde, diacetyl(2,2-butanedione), vanillin, ethyl vanillin, and citral (3,7-dimethyl-2,6-octadienal).

4. Use of salt particles according to any one of the preceding claims wherein a mixture of salts comprising NaCl and/or KCI is used to produce said salt particles which comprise from 1 to 50% by weight of a salt which is selected from the group consisting of sodium lactate, trisodium citrate, sodium gluconate, monosodium phosphate, disodium phosphate, trisodium phosphate, tetrasodium acid pyrophosphate, sodium acid sulfate, sodium carbonate, sodium bicarbonate, potassium citrate, potassium gluconate, monopotassium phosphate, dipotassium phosphate, tripotassium phosphate, tetrapotassium pyrophosphate, potassium sulfate, potassium acetate, potassium bicarbonate, potassium bromide, potassium lactate, calcium chloride, calcium acetate, calcium chloride, calcium citrate, calcium-D- gluconate, calcium lactate, calcium levulinate, dibasic calcium phosphate, magnesium oxide, magnesium chloride, magnesium carbonate and magnesium sulfate, ammonium chloride, and combinations thereof.

5. Process to prepare a free-flowing salt product comprising sodium chloride (NaCI) and/or potassium chloride (KCI), wherein the salt product has a particle size of from 50 µm to 1000 µm, which process comprises the steps of:
a. processing a source of pure NaCl, pure KCI, or mixture of salts, to form particles with an average size of less than 100 micrometer;
b. subsequently, compacting the particles from step a) using a pressure of from 40 to 400 MPa; and optionally, crushing the thus obtained particles; and
c. subsequently, absorbing one or more agents into the salt particles, **characterized in that** no agent is added in or during steps a) and b) or between steps a) and b), and wherein the agent is in liquid form, not being water or any other liquid in which the salt dissolves for more than 5% by weight at 20°C at 1 atm (1,013 bar), and wherein the amount of the one or more agents which is absorbed into the salt grains is between 1 to 8% by weight, based on the total weight of the salt product.

6. Process according to claim 5 wherein the agent is selected from a flavouring agent, a colouring agent, and a fragrance.

7. Process according to claim 5 or 6 wherein the agent is selected from the group consisting of butterfat, depot fat, lard, lard oil, neat's-foot oil, tallow, cod-liver oil, herring oil, menhaden oil, sardine oil, sperm oil, whale oil, vegetable oils derived from allspice, almond, aloe-vera, angelica, aniseed, apricot kernel, arnica, avocado, baobab, basil, bay, benzoin, bergamot, birch, bitter almond, pepper, bell pepper, blackberry, blueberry, boldo, buchu, cajuput, calamus, capsicum, cardamom, chamomile, chicory root, calendula, camphor, caraway, carrot seed, cassia, cedar wood, chive, cineole, cinnamon, citronella, citrus, clary sage, clove, cocoa butter, coconut, coffee, coriander, corn, cotton seed, cumin, cypress, dill, elemi, eucalyptus, evening primrose, fennel, frankincense, garlic, geranium, ginger, grape seed, grapefruit, hazelnut, helichrysum, hop, hyssop, jasmine, jojoba, juniper, kola, lavandin, lavender, leek, lemon, lemongrass, lemon verbena, licorice root, lime, linseed, macadamia, mandarin, marigold, marjoram, marula, melissa, mugwort, mustard, myrrh, neem, neroli, niaouli, niger seed, nutmeg, oiticica, olive, onion, orange, oregano, palm, palm kernel, palma rosa, paprika, patchouli, peanut, pennyroyal, peppermint, perilla, petitgrain, pimento, pine, poppy seed, pumpkin seed, rapeseed, rice bran, rose, rose geranium, rose otto, rosehip, rosemary, rosewood, rue, safflower, sage, sandalwood, sarsaparilla root, sassafras bark, savin, sesame, soybean, spearmint, spikenard, sunflower, high oleic sunflower, tagetes, tamarind, tangerine, tansy, tarragon, thuja, thyme, tea tree, tuberose, tung, turmeric, vanilla, vernonia, vetiver, walnut, wheat germ, wintergreen, wormseed, wormwood, yarrow, ylang-ylang, babassu oil, castor oil, yeast extracts, celery extracts, mushroom extracts, benzaldehyde, diacetyl(2,2-butanedione), vanillin, ethyl vanillin, and citral (3,7-dimethyl-2,6-octadienal).

8. Process according to any one of claims 5-7 wherein the mixture of salts used in step (a) comprises from 1 to 50% by weight of a salt which is selected from the group consisting of sodium lactate, trisodium citrate, sodium gluconate, monosodium phosphate, disodium phosphate, trisodium phosphate, tetrasodium acid pyrophosphate, sodium acid sulfate, sodium carbonate, sodium bicarbonate, potassium citrate, potassium gluconate, monopotassium phosphate, dipotassium phosphate, tripotassium phosphate, tetrapotassium pyrophosphate, potassium sulfate, potassium acetate, potassium bicarbonate, potassium bromide, potassium lactate, calcium chloride, calcium acetate, calcium chloride, calcium citrate, calcium-D- gluconate, calcium lactate, calcium levulinate, dibasic calcium phosphate, magnesium oxide, magnesium chloride, magnesium carbonate and magnesium sulfate, ammonium chloride, and combinations thereof.

## Patentansprüche

1. Verwendung von Salzteilchen, die eine Teilchengröße von 50 µm bis 1000 µm aufweisen, zum Absorbieren von 1 bis 8 Gew.-%, auf die Gesamtmenge von Salzteilchen bezogen, eines oder mehrerer Mittel in die Salzteilchen, um ein freifließendes Salzprodukt herzustellen, das das/die Mittel umfasst, wobei die Salzteilchen, in die das eine oder die mehreren Mittel absorbiert werden, erhalten worden sind durch
(a) Verarbeiten einer Quelle von reinem NaCl, reinem KCl oder einer Mischung von Salzen umfassend NaCl und/oder KCl, um Teilchen mit einer durchschnittlichen Größe von weniger als 100 Mikrometern zu bilden, gefolgt von
(b) Verdichten der Teilchen unter Anwendung eines Drucks von 40 bis 400 MPa und
wahlweise Unterwerfen der so erhaltenen Teilchen einem Zerkleinerungsschritt,
wobei kein Mittel in die oder während der Schritte (a) und (b) zugegeben wird und kein Mittel zwischen den Schritten (a) und (b) zugegeben wird und wobei das Mittel sich in flüssiger Form befindet, nicht Wasser oder irgendeine andere Flüssigkeit ist, in der das Salz sich mehr als 5 Gew.-% bei 20 °C unter 1 atm (1.013 bar) löst.

2. Verwendung von Salzteilchen nach Anspruch 1 zum Absorbieren eines oder mehrerer Mittel ausgewählt aus der Gruppe bestehend aus einem Aromastoff, einem Farbmittel und einem Duftstoff.

3. Verwendung von Salzteilchen nach Anspruch 1 oder 2, wobei das Mittel aus der Gruppe ausgewählt wird bestehend aus Butterfett, Speicherfett, Schmalz, Schmalzöl, Klauenöl, Talg, Lebertran, Heringöl, Menhadenöl, Sardinenöl, Walratöl, Walfischtran, Pflanzenölen, die abgeleitet sind von Allerleigewürz, Mandel, Aloe Vera, Angelika, Anis, Aprikosenkern, Arnika, Avocado, Baobab, Basilikum, Lorbeer, Benzoin, Goldmelisse, Birke, Bittermandel, Pfeffer, Paprikaschote, Brombeere, Heidelberg, Boldo, Buccos, Kajeput, Kalmus, Gemüsepaprika, Kardamom, Kamille, Zichorie, Ringelblume, Kampfer, Kümmel, Karottensamen, Kassie, Zedernholz, Schnittlauch, Cinelle, Zimt, Zitronelle, Zitruspflanze, Muskat-Salbei, Nelke, Kakaobutter, Kokosnuss, Kaffee, Koriander, Mais, Baumwollsamen, Kreuzkümmel, Zypresse, Gurkenkraut, Elemi, Eukalyptus, Gemeiner Nachtkerze, Fenchel, Weihrauchpflanze, Knoblauch, Geranie, Ingwer, Traubenkern, Pampelmuse, Haselnuss, Strohblume, Hopfen, Eisenkraut, Jasmin, Jojoba, Wacholder, Kola, Lavandin, Lavendel, Lauch, Zitrone, Citronella, Zitronenverbene, Süßholzwurzel, Limone, Leinsamen, Makadamia, Mandarine, Ringelblume, Majoran, Marula, Melisse, Beifuß, Senf, Myrrhe, Neem, Neroli, Niaouli, Nigersamen, Muskat, Oiticica, Olive, Zwiebel, Orange, Oregano, Palme, Palmkern, Palma rosa, Paprika, Patschuli, Erdnuss, Flohkraut, Pfefferminze, Pernilla, Petitgrain, Piment, Kiefer, Mohnsamen, Kürbiskern, Rapssamen, Reiskleie, Rose, Apfelduftpelargonie, Rose-Otto, Hagebutte, Rosmarin, Palisander, Gartenraute, Safflor, Salbei, Sandelholz, raue Stechwinde, Sassafrasrinde, Jungfernrosmarin, Sesam, Sojabohne, Ährenminze, Bergangelika, Sonnenblume, Sonnenblume mit hohem Oleingehalt, Tagetes, Tamarinde, Mandarine, Gänsefingerkraut, Estragon, Thuja, Thymian, Teebaum, Tuberose, Tung, Gelbwurz, Vanille, Bitterspinat, Vetiver, Walnuss, Weizenkeim, Wintergrün, Wurmsamen, Wermut, Schafgarbe, Ylang-Ylang, Babassuöl, Rizinusöl, Hefeextrakte, Sellerieextrakte, Pilzextrakte, Benzaldehyd, Diacetyl(2,2-butandion), Vanillin, Ethylvanillin und Citral(3,7-dimethyl-2,6-octadienal).

4. Verwendung von Salzteilchen nach einem der vorhergehenden Ansprüche, wobei eine Mischung von Salzen umfassend NaCl und/oder KCl zum Herstellen der Salzteilchen verwendet wird, die Folgendes umfassen: 1 bis 50 Gew.-% eines Salzes, das aus der Gruppe ausgewählt ist bestehend aus Natriumlactat, Trinatriumcitrat, Natriumgluconat, Mononatriumphosphat, Dinatriumphosphat, Trinatriumphosphat, Tetranatriumsäurepyrophosphat, Natriumssäuresulfat, Natriumcarbonat, Natriumbicarbonat, Kaliumcitrat, Kaliumgluconat, Monokaliumphosphat, Dikaliumphosphat, Trikaliumphosphat, Tetrakaliumpyrophosphat, Kaliumsulfat, Kaliumacetat, Kaliumbicarbonat, Kaliumbromid, Kaliumlactat, Calciumchlorid, Calciumacetat, Calciumchlorid, Calciumcitrat, Calcium-D-gluconat, Calciumlactat, Calciumlevulinat, zweibasisches Calciumphosphat, Magnesiumoxid, Magnesiumchlorid, Magnesiumcarbonat und Magnesiumsulfat, Ammoniumchlorid und Kombinationen davon.

5. Verfahren für die Herstellung eines freifließenden Salzprodukts umfassend Natriumchlorid (NaCl) und/oder Kaliumchlorid (KCl), wobei das Salzprodukt eine Teilchengröße von 50 µm bis 1000 µm aufweist, welches Verfahren die Schritte umfasst des:
a. Verarbeitens einer Quelle von reinem NaCl, reinem KCl oder einer Mischung von Salzen, um Teilchen mit einer durchschnittlichen Größe von weniger als 100 Mikrometern zu bilden;
b. daraufhin Verdichtens der Teilchen aus Schritt a) unter Anwendung eines Drucks von 40 bis 400 MPa; und wahlweise Zerkleinerns der so erhaltenen Teilchen; und
c. daraufhin Absorbierens eines oder mehrerer Mittel in die Salzteilchen,
**dadurch gekennzeichnet, dass** kein Mittel in die oder während der Schritte a) und b) oder zwischen den Schritten a) und b) zugegeben wird und wobei das Mittel in flüssiger Form vorliegt, nicht Wasser oder irgend eine andere Flüssigkeit ist, in der das Salz sich mehr als 5 Gew.-% bei 20 °C unter 1 atm (1.013 bar) löst und wobei die Menge des einen oder der mehreren Mittel, die in die Salzkörner absorbiert wird, zwischen 1 und 8 Gew.-%, auf das Gesamtgewicht des Salzprodukts bezogen, beträgt.

6. Verfahren nach Anspruch 5, wobei das Mittel unter einem Aromastoff, einem Farbmittel und einem Duftstoff ausgewählt wird.

7. Verfahren nach Anspruch 5 oder 6, wobei das Mittel aus der Gruppe ausgewählt wird bestehend aus Butterfett, Speicherfett, Schmalz, Schmalzöl, Klauenöl, Talg, Lebertran, Heringöl, Menhadenöl, Sardinenöl, Walratöl, Walfischtran, Pflanzenölen, die abgeleitet sind von Allerleigewürz, Mandel, Aloe Vera, Angelika, Anis, Aprikosenkern, Arnika, Avocado, Baobab, Basilikum, Lorbeer, Benzoin, Goldmelisse, Birke, Bittermandel, Pfeffer, Paprikaschote, Brombeere, Heidelberg, Boldo, Buccos, Kajeput, Kalmus, Gemüsepaprika, Kardamom, Kamille, Zichorie, Ringelblume, Kampfer, Kümmel, Karottensamen, Kassie, Zedernholz, Schnittlauch, Cinelle, Zimt, Zitronelle, Zitruspflanze, Muskat-Salbei, Nelke, Kakaobutter, Kokosnuss, Kaffee, Koriander, Mais, Baumwollsamen, Kreuzkümmel, Zypresse, Gurkenkraut, Elemi, Eukalyptus, Gemeiner Nachtkerze, Fenchel, Weihrauchpflanze, Knoblauch, Geranie, Ingwer, Traubenkern, Pampelmuse, Haselnuss, Strohblume, Hopfen, Eisenkraut, Jasmin, Jojoba, Wacholder, Kola, Lavandin, Lavendel, Lauch, Zitrone, Citronella, Zitronenverbene, Süßholzwurzel, Limone, Leinsamen, Makadamia, Mandarine, Ringelblume, Majoran, Marula, Melisse, Beifuß, Senf, Myrrhe, Neem, Neroli, Niaouli, Nigersamen, Muskat, Oiticica, Olive, Zwiebel, Orange, Oregano, Palme, Palmkern, Palma rosa, Paprika, Patschuli, Erdnuss, Flohkraut, Pfefferminze, Pernilla, Petitgrain, Piment, Kiefer, Mohnsamen, Kürbiskern, Rapssamen, Reiskleie, Rose, Apfelduftpelargonie, Rose-Otto, Hagebutte, Rosmarin, Palisander, Gartenraute, Safflor, Salbei, Sandelholz, raue Stechwinde, Sassafrasrinde, Jungfernrosmarin, Sesam, Sojabohne, Ährenminze, Bergangelika, Sonnenblume, Sonnenblume mit hohem Oleingehalt, Tagetes, Tamarinde, Mandarine, Gänsefingerkraut, Estragon, Thuja, Thymian, Teebaum, Tuberose, Tung, Gelbwurz, Vanille, Bitterspinat, Vetiver, Walnuss, Weizenkeim, Wintergrün, Wurmsamen, Wermut, Schafgarbe, Ylang-Ylang, Babassuöl, Rizinusöl, Hefeextrakte, Sellerieextrakte, Pilzextrakte, Benzaldehyd, Diacetyl(2,2-butandion), Vanillin, Ethylvanillin und Citral(3,7-dimethyl-2,6-octadienal).

8. Verfahren nach einem der Ansprüche 5-7, wobei die Mischung von Salzen, die in Schritt (a) verwendet werden, Folgendes umfasst: 1 bis 50 Gew.-% eines Salzes, das aus der Gruppe ausgewählt ist bestehend aus Natriumlactat, Trinatriumcitrat, Natriumgluconat, Mononatriumphosphat, Dinatriumphosphat, Trinatriumphosphat, Tetranatriumsäurepyrophosphat, Natriumssäuresulfat, Natriumcarbonat, Natriumbicarbonat, Kaliumcitrat, Kaliumgluconat, Monokaliumphosphat, Dikaliumphosphat, Trikaliumphosphat, Tetrakaliumpyrophosphat, Kaliumsulfat, Kaliumacetat, Kaliumbicarbonat, Kaliumbromid, Kaliumlactat, Calciumchlorid, Calciumacetat, Calciumchlorid, Calciumcitrat, Calcium-D-gluconat, Calciumlactat, Calciumlevulinat, zweibasisches Calciumphosphat, Magnesiumoxid, Magnesiumchlorid, Magnesiumcarbonat und Magnesiumsulfat, Ammoniumchlorid und Kombinationen davon.

## Revendications

1. Utilisation de particules de sel ayant une taille de particule de 50 µm à 1 000 µm pour absorber entre 1 et 8 % en poids, sur la base de la quantité totale de particules de sel, d'un ou plusieurs agents dans lesdites particules de sel, afin de produire un produit à base de sel fluide comprenant ledit ou lesdits agents, moyennant quoi les particules de sel dans lesquelles le ou les agents sont absorbés ont été obtenues par
(a) traitement d'une source de NaCI pure, de KCI pur ou d'un mélange de sels comprenant du NaCI et/ou du KCI, pour former des particules ayant une taille moyenne inférieure à 100 µm, suivi par
(b) compactage desdites particules en utilisant une pression de 40 à 400 MPa, et
éventuellement, soumission des particules ainsi obtenues à une étape de broyage,
moyennant quoi aucun agent n'est ajouté dans ou pendant les étapes (a) et (b) et aucun agent n'est ajouté entre les étapes (a) et (b), et dans laquelle l'agent est sous une forme liquide, qui n'est pas de l'eau ou aucun autre liquide dans lequel le sel se dissout à plus de 5 % en poids à 20 °C à 1 atm (1,013 bar).

2. Utilisation de particules de sel selon la revendication 1 pour absorber un ou plusieurs agents sélectionnés dans le groupe constitué par un agent aromatisant, un agent colorant et un parfum.

3. Utilisation de particules de sel selon la revendication 1 ou 2 dans laquelle l'agent est sélectionné dans le groupe constitué par la graisse de beurre, la graisse de dépôt, le saindoux, l'huile de saindoux, l'huile de pattes de bœuf, le suif, l'huile de foie de morue, l'huile de hareng, l'huile de menhaden, l'huile de sardine, l'huile de cachalot, l'huile de baleine, les huiles végétales dérivées de piment de la Jamaïque, d'amande, d'aloe vera, d'angélique, d'anis, de noyau d'abricot, d'arnica, d'avocat, de baobab, de basilic, de laurier, de benjoin, de bergamote, de bouleau, d'amande amère, de poivre, de poivron, de mûre, de myrtille, de boldo, de buchu, de cajuput, de calamus, de capsicum, de cardamome, de camomille, de racine de chicorée, de calendula, de camphre, de carvi, de graines de carotte, de casse, de bois de cèdre, de ciboulette, de cinéol, de cannelle, de citronnelle, d'agrumes, de sauge sclarée, de clou de girofle, de beurre de cacao, de noix de coco, de café, de coriandre, de maïs, de graines de coton, de cumin, de cyprès, d'aneth, d'élémi, d'eucalyptus, d'onagre, de fenouil, d'encens, d'ail, de géranium, de gingembre, de pépins de raisin, de pamplemousse, de noisette, d'hélichryse, de houblon, d'hysope, de jasmin, de jojoba, de genévrier, de kola, de lavandin, de lavande, de poireau, de citron, de lemon-grass, de verveine citronnée, de racine de réglisse, de citron vert, de graines de lin, de macadamia, de mandarine, de souci, de marjolaine, de marula, de mélisse, d'armoise, de moutarde, de myrrhe, de margousier, de néroli, de niaouli, de graines de niger, de muscade, d'oiticica, d'olive, d'oignon, d'orange, d'origan, de palme, de palmiste, de palma rosa, de paprika, de patchouli, d'arachide, de menthe pouillot, de menthe poivrée, de périlla, de petit grain, de piment, de pin, de graines de pavot, de graines de citrouille, de colza, de son de riz, de rose, de géranium rosat, de rose otto, d'églantier, de romarin, de bois de rose, de rue, de carthame, de sauge, de bois de santal, de racine de salsepareille, d'écorce de sassafras, de sabine, de sésame, de soja, de menthe verte, de nard, de tournesol, de tournesol à haute teneur en oléique, de tagetes, de tamarin, de clémentine, de tanaisie, d'estragon, de thuya, de thym, d'arbre à thé, de tubéreuse, de tung, de curcuma, de vanille, de vernonia, de vétiver, de noix, de germe de blé, de gaulthérie, de sémentine, d'absinthe, de millefeuille, d'ylang-ylang, l'huile de babassu, l'huile de ricin, les extraits de levure, les extraits de céleri, les extraits de champignons, le benzaldéhyde, le diacétyle (2,2-butanedione), la vanilline, l'éthylvanilline et le citral (3,7-diméthyl-2,6-octadiénal).

4. Utilisation de particules de sel selon l'une quelconque des revendications précédentes dans laquelle un mélange de sels comprenant du NaCI et/ou du KCI est utilisé pour produire lesdites particules de sel qui comprennent de 1 à 50 % en poids d'un sel qui est sélectionné dans le groupe constitué par le lactate de sodium, le citrate trisodique, le gluconate de sodium, le phosphate monosodique, le phosphate disodique, le phosphate trisodique, le pyrophosphate d'acide tétrasodique, le sulfate d'acide sodique, le carbonate de sodium, le bicarbonate de sodium, le citrate de potassium, le gluconate de potassium, le phosphate monopotassique, le phosphate dipotassique, le phosphate tripotassique, le pyrophosphate tétrapotassique, le sulfate de potassium, l'acétate de potassium, le bicarbonate de potassium, le bromure de potassium, le lactate de potassium, le chlorure de calcium, l'acétate de calcium, le chlorure de calcium, le citrate de calcium, le D-gluconate de calcium, le lactate de calcium, le lévulinate de calcium, le phosphate de calcium dibasique, l'oxyde de magnésium, le chlorure de magnésium, le carbonate de magnésium et le sulfate de magnésium, le chlorure d'ammonium et des combinaisons de ceux-ci.

5. Procédé pour préparer un produit à base de sel fluide comprenant du chlorure de sodium (NaCI) et/ou du chlorure de potassium (KCI), dans lequel le produit à base de sel a une taille de particule de 50 µm à 1 000 µm, lequel procédé comprend les étapes de :
a. traitement d'une source de NaCI pure, de KCI pur ou d'un mélange de sels, pour former des particules ayant une taille moyenne inférieure à 100 µm ;
b. ensuite, compactage des particules de l'étape a) en utilisant une pression de 40 à 400 MPa ; et éventuellement broyage des particules ainsi obtenues ; et
c. ensuite, absorption d'un ou plusieurs agents dans les particules de sel,
**caractérisé en ce qu'**aucun agent n'est ajouté dans ou pendant les étapes a) et b) ou entre les étapes a) et b), et dans lequel l'agent est sous une forme liquide, qui n'est pas de l'eau ou aucun autre liquide dans lequel le sel se dissout à plus de 5 % en poids à 20 °C à 1 atm (1,013 bar), et dans lequel la quantité du ou des agents qui est absorbée dans les grains de sel est comprise entre 1 et 8 % en poids, sur la base du poids total du produit à base de sel.

6. Procédé selon la revendication 5 dans lequel l'agent est sélectionné parmi un agent aromatisant, un agent colorant et une fragrance.

7. Procédé selon la revendication 5 ou 6 dans lequel l'agent est sélectionné dans le groupe constitué par la graisse de beurre, la graisse de dépôt, le saindoux, l'huile de saindoux, l'huile de pattes de bœuf, le suif, l'huile de foie de morue, l'huile de hareng, l'huile de menhaden, l'huile de sardine, l'huile de cachalot, l'huile de baleine, les huiles végétales dérivées de piment de la Jamaïque, d'amande, d'aloe vera, d'angélique, d'anis, de noyau d'abricot, d'arnica, d'avocat, de baobab, de basilic, de laurier, de benjoin, de bergamote, de bouleau, d'amande amère, de poivre, de poivron, de mûre, de myrtille, de boldo, de buchu, de cajuput, de calamus, de capsicum, de cardamome, de camomille, de racine de chicorée, de calendula, de camphre, de carvi, de graines de carotte, de casse, de bois de cèdre, de ciboulette, de cinéol, de cannelle, de citronnelle, d'agrumes, de sauge sclarée, de clou de girofle, de beurre de cacao, de noix de coco, de café, de coriandre, de maïs, de graines de coton, de cumin, de cyprès, d'aneth, d'élémi, d'eucalyptus, d'onagre, de fenouil, d'encens, d'ail, de géranium, de gingembre, de pépins de raisin, de pamplemousse, de noisette, d'hélichryse, de houblon, d'hysope, de jasmin, de jojoba, de genévrier, de kola, de lavandin, de lavande, de poireau, de citron, de lemon-grass, de verveine citronnée, de racine de réglisse, de citron vert, de graines de lin, de macadamia, de mandarine, de souci, de marjolaine, de marula, de mélisse, d'armoise, de moutarde, de myrrhe, de margousier, de néroli, de niaouli, de graines de niger, de muscade, d'oiticica, d'olive, d'oignon, d'orange, d'origan, de palme, de palmiste, de palma rosa, de paprika, de patchouli, d'arachide, de menthe pouillot, de menthe poivrée, de périlla, de petit grain, de piment, de pin, de graines de pavot, de graines de citrouille, de colza, de son de riz, de rose, de géranium rosat, de rose otto, d'églantier, de romarin, de bois de rose, de rue, de carthame, de sauge, de bois de santal, de racine de salsepareille, d'écorce de sassafras, de sabine, de sésame, de soja, de menthe verte, de nard, de tournesol, de tournesol à haute teneur en oléique, de tagetes, de tamarin, de clémentine, de tanaisie, d'estragon, de thuya, de thym, d'arbre à thé, de tubéreuse, de tung, de curcuma, de vanille, de vernonia, de vétiver, de noix, de germe de blé, de gaulthérie, de sémentine, d'absinthe, de millefeuille, d'ylang-ylang, l'huile de babassu, l'huile de ricin, les extraits de levure, les extraits de céleri, les extraits de champignons, le benzaldéhyde, le diacétyle (2,2-butanedione), la vanilline, l'éthylvanilline et le citral (3,7-diméthyl-2,6-octadiénal).

8. Procédé selon l'une quelconque des revendications 5 à 7 dans lequel le mélange de sels utilisé à l'étape (a) comprend de 1 à 50 % en poids d'un sel qui est sélectionné dans le groupe constitué par le lactate de sodium, le citrate trisodique, le gluconate de sodium, le phosphate monosodique, le phosphate disodique, le phosphate trisodique, le pyrophosphate d'acide tétrasodique, le sulfate d'acide sodique, le carbonate de sodium, le bicarbonate de sodium, le citrate de potassium, le gluconate de potassium, le phosphate monopotassique, le phosphate dipotassique, le phosphate tripotassique, le pyrophosphate tétrapotassique, le sulfate de potassium, l'acétate de potassium, le bicarbonate de potassium, le bromure de potassium, le lactate de potassium, le chlorure de calcium, l'acétate de calcium, le chlorure de calcium, le citrate de calcium, le D-gluconate de calcium, le lactate de calcium, le lévulinate de calcium, le phosphate de calcium dibasique, l'oxyde de magnésium, le chlorure de magnésium, le carbonate de magnésium et le sulfate de magnésium, le chlorure d'ammonium et des combinaisons de ceux-ci.
